# EUROPEAN PATENT SPECIFICATION

(11) **EP 4 099 433 B1**
(45) Date of publication and mention of the grant of the patent: **20.05.2026**
(21) Application number: 21747475.8
(22) Date of filing: 21.01.2021
(51) Int. Cl.: H01M 4/134, H01M 4/38, H01M 4/62, H01M 10/0525, H01M 4/02

(54) **LITHIUM ION BATTERY**
LITHIUM-IONEN-BATTERIE
BATTERIE AU LITHIUM-ION

(30) Priority: 30.01.2020 JP 2020014048
(43) Date of publication of application: 07.12.2022
(73) Proprietor: Panasonic Intellectual Property Management Co., Ltd., Osaka-shi, Osaka 540-6207 (JP)
(72) Inventor: ASANO Kazuko, Osaka-shi, Osaka 540-6207 (JP); OKI Yukihiro, Osaka-shi, Osaka 540-6207 (JP); TAKEDA Nanami, Osaka-shi, Osaka 540-6207 (JP); HIBINO Mitsuhiro, Osaka-shi, Osaka 540-6207 (JP)
(74) Representative: Novagraaf International SA
(86) International application number: PCT/JP2021/001964
(87) International publication number: WO 2021/153401

(56) References cited:
- CN-A- 102 856 531
- JP-A- 2005 310 739
- JP-A- 2010 218 855
- JP-A- 2013 125 636
- US-A1- 2005 214 643
- US-A1- 2018 331 357

## Description

### TECHNICAL FIELD

The present disclosure relates to a lithium-ion battery including a positive electrode with a positive electrode mixture layer which contains a positive electrode active material, and a negative electrode with a negative electrode mixture layer which contains a negative electrode active material. Charging and discharging are caused by lithium ions moving between the positive electrode and the negative electrode.

### BACKGROUND ART

Lithium (Li) ion batteries, in which charging and discharging are caused by lithium ions moving between a positive electrode and a negative electrode are widely used. For a negative electrode active material of a negative electrode mixture layer in lithium ion batteries, graphite-based materials are often used. The graphite-based negative electrode active material may sometimes be used with Si. However, in this case, a significant volume change may occur during charging or discharging, capacity retention properties is likely to be deteriorated, and a relatively high cost may be required.

In light of above, negative electrode active materials other than the graphite-based materials are proposed. For example, Patent Literature 1 discloses using an alloy having a crystal structure of La₃Co₂Sn₇ used for the negative electrode active material.

A binder may be used in the negative electrode mixture layer to reduce peeling and cracking. However, because too much binder would lower the battery reaction efficiency of the negative electrode active material, a reduction in the amount of the binder is desirable. Patent Literature 2 discloses a binder in the amount of 0.5 weight% to 5.0 weight%. Patent Literature 3 relates to a power storage device and a manufacturing method thereof. Patent Literature 4 relates to a negative electrode of a lithium ion battery and a lithium ion battery. Patent Literature 5 relates to a nonaqueous electrolyte secondary battery.

### CITATION LIST

### PATENT LITERATURE

PATENT LITERATURE 1: JP 4127692 B
PATENT LITERATURE 2: JP 2007-258127 A
PATENT LITERATURE 3: US 2018/331357 A1
PATENT LITERATURE 4: CN 102 856 531 A
PATENT LITERATURE 5: US 2005/214643 A1

### SUMMARY

Patent Literature 1 describes a use of polyvinylidene fluoride (PVDF) as a binder. However, it was found as a test result that when PVDF was used as the binder with La₃Ni₂Sn₇ used as an active material, these materials reacted each other to cause gelation of the mixture slurry used to form a negative electrode mixture layer, making a coating process difficult. In order to enable the coating by lowering the reaction between the La₃Ni₂Sn₇ and PVDF, the particle sizes of the negative electrode active material should be increased. However, as the negative electrode active material of larger particle sizes reduce reaction between the negative electrode active material and Li, the capacity is likely to be declined.

The invention is as set out in the independent claims, further aspects of the invention are outlined in the dependent claims. Embodiments that do not fall within the scope of the claims do not describe part of the invention.

A lithium-ion battery according to an embodiment of the present disclosure comprises a positive electrode with a positive electrode mixture layer containing a positive electrode active material, and a negative electrode with a negative electrode mixture layer containing a negative electrode active material. Charging and discharging are caused by lithium-ions moving between the positive electrode and the negative electrode. The negative electrode mixture contains the negative electrode active material represented by a general formula M₃Me₂X₇ (where M includes at least one of La and Ca; Me includes at least one of Mn, Ni, Fe, and Co; and X includes at least one of Ge, Si, Sn, and Al). The negative electrode mixture also contains a binder containing a cyano group. The ratio of the binder in the negative electrode mixture layer is 0.5 weight% to 7.0 weight%.

In an embodiment according to the present disclosure, a material represented by a general formula M₃Me₂X₇ is used as the negative electrode active material, and a binder containing a cyano group is added in the mount of 0.5 weight% to 7.0 weight%. This enables coating application of the negative electrode layer. Further, because a relatively small amount of the binder is applied, the decline in the capacity can be reduced.

### BRIEF DESCRIPTION OF DRAWING

FIG. 1 is a longitudinal cross sectional view of a cylindrical secondary battery 10 according to an embodiment of the present disclosure.
FIG. 2 is a graph showing initial efficiencies of Examples 1 to 5 and Comparative Example 1.
FIG. 3 is a graph showing discharge capacities of Examples 1 to 5 in the first cycle.

### DESCRIPTION OF EMBODIMENTS

Embodiments according to the present disclosure are described below with reference to the attached drawings. It should be noted that the present disclosure is not limited to the embodiments described below.

### Negative Electrode Material

Negative electrode materials used for lithium-ion batteries are desired to have a high energy density and a low expansion. Various types of research and development have been performed. For the negative electrode active material, a use of an intermetallic compound represented by M₃Me₂X₇ (M = La or Ca; Me = Mn, Ni, Fe, or Co; and X = Ge, Si, Sn, or Al), for example, La₃Ni₂Sn₇, is proposed. As such an intermetallic compound performs Li absorption and release through intercalation reactions, expansion can be low and a long life can be achieved.

However, it has been found that further improvement is required to actually use the material. First of all, as described above, use of PVDF as the binder may cause gelation of the negative electrode mixture slurry, making it difficult to apply the negative electrode mixture layer. When the gelation is reduced by using the binder of larger particle diameters, the battery reaction may be impeded.

In the present disclosure, the gelation of the negative electrode mixture slurry is impeded by using a binder which contains a cyano group, such as polyacrylonitrile (PAN). This can reduce the amount of the binder required to be applied to the negative electrode mixture layer to a range from 2.0 weight% to 5.0 weight%.

As described above, the coating application of the negative electrode mixture layer is enabled and a battery having a high energy density can be provided by using the negative electrode active material having a crystal structure of M₃Me₂X₇ and the binder containing a cyano group.

### Structural Embodiments of Present Disclosure

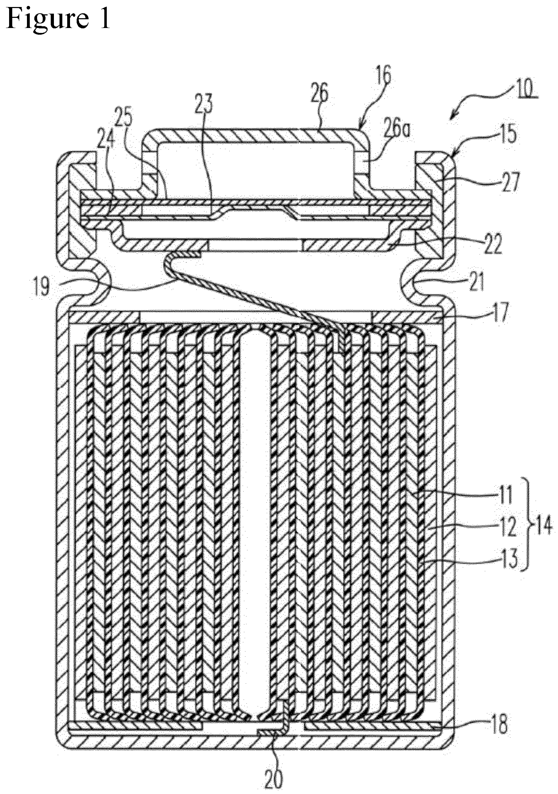

FIG. 1 shows a longitudinal cross section of a cylindrical secondary battery 10 according to an embodiment of the present disclosure. In the secondary battery 10 shown in FIG. 1, an outer housing body15 houses an electrode assembly 14 and non-aqueous electrolyte. The electrode assembly 14 has a rolled structure in which a positive electrode 11 and a negative electrode 12 are rolled via a separator 13. As the non-aqueous solvent (an organic solvent) of the non-aqueous electrolyte, carbonates, lactones, ethers, ketones, and esters may be used. These solvents may be used alone or in mixture of two or more solvents. For a mixture of two or more solvents, a mixture solvent containing a cyclic carbonate and a chain carbonate may be used. For the cyclic carbonate, for example, ethylene carbonate (EC), propylene carbonate (PC), or butylene carbonate (BC) may be used. For the chain carbonate, for example, dimethyl carbonate (DMC), ethyl methyl carbonate (EMC), or diethyl carbonate (DEC) may be used. For the electrolyte salt of the non-aqueous electrolyte, LiPF₆, LiBF₄, LiCF₃SO₃ may be used alone or in mixture. The amount of the electrolyte salt to be dissolved in the non-aqueous solvent may be, for example, 0.5 to 2.0 mol/L. In the description below, in order to facilitate positional description, the side on which a sealing assembly 16 is located is referred to as "top", and other side on which the bottom of the outer housing body 15 is located as "bottom".

The secondary battery 10 is sealed with the sealing assembly 16 sealed around the opening edge of the outer housing body 15. Insulating plates 17, 18 are respectively provided on the top and at the bottom of the electrode assembly 14. A positive electrode lead 19 extends upward through a through hole of the insulating plate 17 and welded on a bottom surface of a filter 22 which is a bottom plate of the sealing assembly 16. In the secondary battery 10, a cap 26, which is the top plate of the sealing assembly 16 electrically connected to the filter 22 serves as a positive electrode terminal. A negative electrode lead 20 extends downward through a through hole of the insulating plate 18 to the bottom of the outer housing body 15 and is welded on the inner bottom surface of the outer housing body 15. In the secondary battery 10, the outer housing body 15 serves as a negative electrode terminal. When the negative electrode lead 20 is positioned around the rolling end, the negative electrode lead 20 may extend on the outer side of the insulating plate 18 to the bottom of the outer housing body 15 and is welded on the inner bottom surface of the outer housing body 15.

The outer housing body 15 may be, for example, a cylindrical metal can housing with a bottom. A gasket 27 may be provided between the outer housing body 15 and the sealing assembly 16 to ensure sealing of the secondary battery 10. The outer housing body 15 may include a grooved portion 21 for supporting the sealing assembly 16. The grooved portion 21 may be formed by, for example, pressing the side surface from the outer side. The grooved portion 21 may be formed to extend annularly along the outer circumference of the outer housing body 15. The upper surface of the grooved portion 21 supports the sealing assembly 16 via the gasket 27.

The sealing assembly 16 may include the filter 22, a lower vent member 23, an insulating member 24, an upper vent member 25, and the cap 26 positioned in this order from the electrode assembly 14 side. Each of these components of the sealing assembly 16 has, for example, a disk or ring shape, and all the components except for the insulating member 24 are electrically connected to each other. The lower vent member 23 and the upper vent member 25 may be connected to each other at the center of these components with the insulating member 24 sandwiched therebetween around the circumference edges of these components. When the internal pressure of the battery increases due to overheat, the lower vent member 23 may be broken, and the upper vent member 25 may swell towards the cap 26, moving away from the lower vent member 23. This disconnects the electrical connection between the upper vent member 25 and the lower vent member 23. If the internal pressure increases further, the upper vent member 25 may rupture, and gas may be exhausted from an opening 26a of the cap 26.

The positive electrode 11, the negative electrode 12, and the separator 13 of the electrode assembly 14 are described below. In particular, the negative electrode active material of the negative electrode 12 is described in detail below.

### Positive Electrode

The positive electrode 11 includes a positive electrode core and a positive electrode mixture layer disposed on a surface of the positive electrode core. The positive electrode core may be made from a foil of metal such as aluminum that is stable within a potential range of the positive electrode 11, or a film which includes the metal at the outermost layer. The positive electrode core may have a thickness of, for example, 10 µm to 30 µm. The positive electrode mixture layer may include a positive electrode active material, a binder, and a conductive agent. The positive electrode mixture layer may be provided on each side of the positive electrode core except for the area to which the positive electrode lead 19 is connected. The positive electrode 11 may be manufactured by forming the positive electrode mixture layer on each side of the positive electrode core by, for example, coating the surfaces of the positive electrode core with the positive electrode mixture slurry containing the positive electrode active material, the binder, and the conductive agent, and drying and compressing the coated film.

The positive electrode active material contains a lithium-transition metal oxide as the main substance. The positive electrode active material may be made from a lithium-transition metal oxide substantially alone, or a lithium-transition metal oxide with inorganic compound particles, such as the ones containing an oxide aluminum or a lanthanoid attached to particle surfaces of the lithium-transition metal oxide. A single type or two or more types of the lithium-transition metal oxide may be used.

The lithium-transition metal oxide may contain the following metal elements: nickel (Ni), cobalt (Co), magnum (Mn), aluminum (Al), boron (B), magnesium (Mg), titanium (Ti), vanadium (V), chromium (Cr), iron (Fe), copper (Cu), zinc (Zn), gallium (Ga), strontium (Sr), zirconium (Zr), niobium (Nb), indium (In), tin (Sn), tantalum (Ta), or tungsten (W). A preferable example of the lithium-transition metal oxide is a composite oxide which is represented with a general formula LiₐNiₓM₍₁₋ₓ₎O₂ (0.1 ≤ α ≤ 1.2, 0.3 ≤ x < 1, where M contains at least one of Co, Mn, and Al). For example, the positive electrode may be made from NCA in which nickel is partially replaced with cobalt, and to which aluminum is added.

The conductive agent in the positive electrode mixture layer may be made from, for example, a carbon material such as carbon black, acetylene black, Ketjenblack, carbon nanotube, carbon nanofiber, and graphite. The binder in the positive electrode mixture layer may be made from, for example, a fluororesin such as polytetrafluoroethylene (PTFE) and polyvinylidene fluoride (PVDF), polyacrylonitrile (PAN), a polyimide resin, an acrylic resin, and a polyolefin resin. Together with these resins, for example, a cellulose derivative such as carboxymethyl cellulose (CMC) or a salt thereof, and polyethylene oxide (PEO) may be used in combination.

### Negative Electrode

The negative electrode 12 includes a negative electrode core and a negative electrode mixture layer disposed on a surface of the negative electrode core. The negative electrode core may be made from a foil of metal such as copper that is stable within a potential range of the negative electrode 12, or a film which includes the metal at the outermost layer. The negative electrode core may have a thickness of, for example, 5 µm to 15 µm. The negative electrode mixture layer includes a negative electrode active material and a binder. The negative electrode mixture layer may be provided on each side of the negative electrode core except for the area to which the negative electrode lead 20 is connected. The negative electrode 12 may be manufactured by forming the negative electrode mixture layer on each side of the negative electrode core by, for example, coating the surfaces of the negative electrode core with a negative electrode mixture slurry containing the negative electrode active material and the binder, and drying and compressing the coated film. A conductive agent may be applied to the negative electrode mixture slurry. The conductive agent enables a uniform distribution of conductive paths. Similarly to the positive electrode mixture layer, the negative electrode mixture may contain the conductive agent, such as acetylene black.

The negative electrode mixture layer may contain an intermetallic compound (an alloy of M₃Me₂X₇ type crystal) represented by a general formula M₃Me₂X₇ (where M includes at least one of La and Ca; Me includes at least one of Mn, Ni, Fe, and Co; and X includes at least one of Ge, Si, Sn, and Al). The negative electrode active material may be, for example, La₃Co₂Sn₇, La₃Mn₂Sn₇, or La₃Ni₂Sn₇. Among them, in order to increase capacity, La₃Co₂Sn₇ and La₃Mi₂Sn₇ are preferable, and La₃Ni₂Sn₇ is particularly preferable.

The particle diameter of M₃Me₂X₇, which is the negative electrode active material, may be 1 to 30 µm, more preferably, 2 to 20 µm, and most preferably, 2 to 10 µm. When M₃Me₂X₇ having too large particle diameters is used, reaction with Li is slowed, and the resistance between particles increases because the contact areas between particles decrease. In contrast, when M₃Me₂X₇ having too small particle diameters is used, the filling density of the negative electrode active material is reduced, and thereby the capacity is assumed to decline. The average particle diameter of M₃Me₂X₇ may be 3 to 15 µm, or 5 to 10 µm. The particle diameters of M₃Me₂X₇ may be obtained by measuring the diameters of circumscribed circles of M₃Me₂X₇ particles in a cross sectional view of the negative electrode mixture layer observed with a scanning electron microscope (SEM). The average particle diameter may be calculated by averaging the diameters of 100 arbitral particles.

The intermetallic compound represented by M₃Me₂X₇ may be obtained by arc melting, and annealing may be performed after arc melting. La for M may be substituted up to about 50%. For example, with about 40% of La substituted by Ca, a large charge/discharge capacity (initial charge capacity of 301 mAh/g, initial discharge capacity of 223 mAh/g (1,718 mAh/cc)) was obtained with a small volume change rate (0.5% or less).

The negative electrode active material may contain M₃Me₂X₇ as the main substance (the substance having the highest weight ratio), or M₃Me₂X₇ substantially alone. Alternatively, the negative electrode active material may contain other active materials, such as intermetallic compounds other than M₃Me₂X₇, carbon-based active materials such as graphite, or Si-based active materials. When used with graphite, the graphite content may be 50 to 90 weight% with respect to the weight of the negative electrode active material.

The binder in the negative electrode mixture layer may be made from a compound which contains a cyano group. When a widely used polyvinylidene fluoride (PVDF) is used as the binder with the above described M₃Me₂X₇ used as the negative electrode active material, gelation of the negative electrode mixture slurry occurs, making the application of the slurry difficult. However, as the use of the binder containing a cyano group improves dispersibility of the negative electrode active material, the gelation of the slurry is impeded. Because the binder containing a cyano group has a high affinity with M₃Me₂X₇, even a small amount of the binder can sufficiently work.

The binder containing a cyano group may be, for example, polyacrylonitrile (PAN), polymethaclonitrile, poly-α-chloroacrylonitrile, and poly-α-ethylacrylonitrile. Among them, PAN and polymethaclonitrile are preferable, and PAN is particularly preferable. The binder containing a cyano group may be, for example, synthesized by polymerizing a monomer containing a cyano group of a carbon number 5 or less. Alternatively, the binder may contain a copolymerization component containing no cyano group in a range not impeding the achievement of the purpose of the present disclosure. The binder containing the cyano group may be used alone or in combination of two or more.

The weight ratio of the binder containing a cyano group in the negative electrode mixture layer may be 0.5 weight% to 7.0 weight%. When the binder in the amount over 7.0 weight% is applied, the initial charge/discharge efficiency is significantly reduced, while when the binder in the amount below 0.5 weight% is applied, it becomes impossible to ensure the binding force between active material particles and between the active material particles and the core. A preferable binder content may be, for example, 1.0 weight% to 5.0 weight%, or 2.0 weight% to 3.0 weight%. The negative electrode mixture layer may include a binder containing no cyano group in a range not impeding the achievement of the purpose of the present disclosure.

### Separator

The separator 13 may be a porous sheet having ion permeation and insulation properties. The porous sheet may be, for example, a fine porous film, a woven fabric, or a nonwoven fabric. As a material for the separator 13, an olefin resin such as a polyethylene and polypropylene, and cellulose may be used. The separator 13 may have a single-layered structure or a multilayered structure. A heat-resistant layer containing a heat-resistant material may be formed on a surface of the separator 13. The heat-resistant material may be, for example, a polyamide resin such as aliphatic polyamide and an aromatic polyamide (aramid), and a polyimide resin such as polyamide-imide and polyimide.

### Examples

Although the present disclosure is described in more detail below with reference to examples, the present disclosure is not limited to any of these examples.

### Example 1

### Manufacturing Negative Electrode

La₃Ni₂Sn₇ having particle diameters of 2 to 20 µm was used as the negative electrode active material, and polyacrylonitrile (PAN) as the binder, and acetylene black as the conductive agent. A negative electrode mixture slurry was prepared by mixing the negative electrode active material, the binder, and the conductive agent at the weight ratio of 96:3:1, and adding N-methyl-2-pyrrolidone (NMP) as a dispersion medium. A negative electrode was obtained by coating a negative electrode core made from a copper foil with the negative electrode mixture slurry, drying and compressing the coated film, and then cutting to a predetermined size of the electrode.

### Preparing Test Cell

An electrode assembly was obtained by disposing the negative electrode to oppose the positive electrode made from a lithium metal foil via the separator, and inserting the electrode assembly into a coin-shaped can housing. A coin-shaped test cell (non-aqueous electrolyte secondary battery) was obtained by sealing the can housing after injecting a predetermined non-aqueous electrolyte solution into the can housing.

### Charging/Discharging Test (Capacity Assessment)

After CC charging the above prepared test cell with the constant current of 0.15 C to the battery voltage of 4.5 V in a room temperature environment, the test cell was CC discharged with the constant current of 0.15 C down to the battery voltage of 2.5 V. This charging and discharging process was repeated three times, while measuring a charging capacity and a discharging capacity in each cycle. The assessment results are shown in Table 1 along with particle diameters of the negative electrode active material, whether the coating with the slurry was possible or impossible, what was used as the binder, and the applied amount of the binder.

### Examples 2 to 5 and Comparative Examples 1 to 4

The test cells were prepared and the charging and discharging tests were performed in the manner same as in Example 1 except that the applied amount of the binder, what was used as the binder, and the particle diameters of the negative electrode active material were changed as shown in Table 1. In Comparative Example 2, polyimide (PI) is used as the binder in place of PAN, while in Comparative Example 3, polyvinylidene fluoride (PVDF) is used in place of PAN.

### Results

Table 1 shows the results of the charging and discharging tests of Examples 1 to 5 and Comparative Examples 1 to 4.

**[Table 1]**

| Charging and Discharging Test Results | | | | | | | | | | | | | |
|---|---|---|---|---|---|---|---|---|---|---|---|---|---|
| | Negative Electrode | | | | 1st | | 2nd | | 3rd | | Charge/Discharge Efficiency | | |
| | Active Material Particle Diameter | Coating Possible/ Impossible | Binder | Applied Amount | Charge mAh/cc | Discharge mAh/cc | Charge mAh/cc | Discharge mAh/cc | Charge mAh/cc | Discharge mAh/cc | 1st Cycle | 2nd Cycle | 3rd Cycle |
| Example 1 | 2~20 µm | Possible | PAN | 1 wt% | 834 | 629 | 637 | 593 | 593 | 592 | 75% | 93% | 100% |
| Example 2 | 2~20 µm | Possible | PAN | 2 wt% | 840 | 653 | 647 | 608 | 579 | 500 | 78% | 94% | 86% |
| Example 3 | 2~20 µm | Possible | PAN | 3 wt% | 834 | 654 | 655 | 603 | 455 | 584 | 78% | 92% | 78% |
| Example 4 | 2~20 µm | Possible | PAN | 5 wt% | 822 | 602 | 614 | 550 | 413 | 546 | 73% | 90% | 76% |
| Example 5 | 2~20 µm | Possible | PAN | 7 wt% | 767 | 578 | 581 | 460 | 279 | 451 | 75% | 79% | 62% |
| Comparative Example 1 | 2~20 µm | Possible | PAN | 10 wt% | 1316 | 646 | 464 | 242 | 100 | 136 | 49% | 52% | 74% |
| Comparative Example 2 | 2~20 µm | Possible | PI | 15 wt% | 4 | 0.5 | 1 | 0.5 | 0.9 | 0.5 | 13% | 50% | 56% |
| Comparative Example 3 | About 10-200 µm | Possible | PVDF | 3 wt% | 379 | 238 | 255 | 205 | 200 | 144 | 63% | 80% | 72% |
| Comparative Example 4 | 2~20 µm | Impossible | PVDF | 3 wt% | - | - | - | - | - | - | - | - | - |

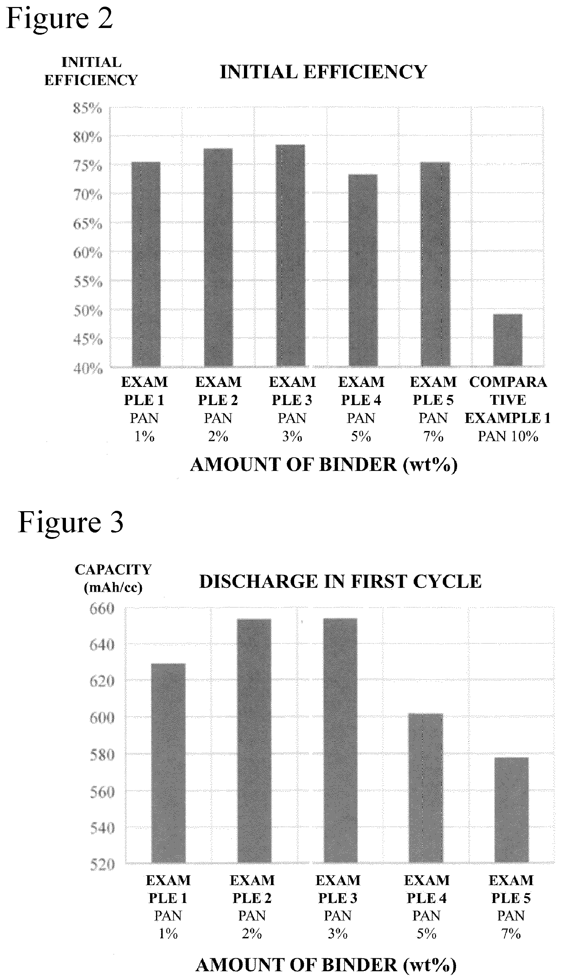

In Examples 1 to 5, relatively high charge/discharge efficiencies were observed in any of the first to third cycles. In contrast, in Comparative Example 1, the charge/discharge efficiency in the first cycle is significantly lower. FIG. 2 is a graph showing initial efficiencies obtained in Examples 1 to 5 and Comparative Example 1. As shown in the graph, in Comparative Example 1, the initial efficiency is significantly lower than those in Examples 1 to 5. The reason for this can be assumed that Li was unable to sufficiently move to the active material due to too much binder.

FIG. 3 shows a graph about the initial discharge capacities of Examples 1 to 5. As shown in the graph, the discharge capacity of Example 5 is lower than those in Examples 1 to 4. As a result, the amount of binder of 1 weight% to 5 weight% can be assumed to be more preferable than the amount of binder of 1 weight% to 7 weight%.

Further, in Comparative Example 4, coating was impossible because the negative electrode mixture slurry gelled due to reaction between La₃Ni₂Sn₇ and PVDF.

It was found that a preferable non-aqueous electrolyte secondary battery can be obtained with La₃Ni₂Sn₇ used as the negative electrode active material, and adding PAN as the binder in the amount of 1 weight% to 7 weight% (more preferably, 1 weight% to 5 weight%).

### REFERENCE SIGNS LIST

10 Secondary battery
11 Positive electrode
12 Negative electrode
13 Separator
14 Electrode assembly
15 Outer housing body
16 Sealing assembly
17, 18 Insulating plates
19 Positive electrode lead
20 Negative electrode lead
21 Grooved portion
22 Filter
23 Lower vent member
24 Insulating member
25 Upper vent member
26 Cap
26a Opening
27 Gasket

## Claims

1. A lithium-ion battery comprising a positive electrode (11) with a positive electrode mixture layer containing a positive electrode active material, and a negative electrode (12) with a negative electrode mixture layer containing a negative electrode active material, charging and discharging is caused by lithium-ions moving between the positive electrode (11) and the negative electrode (12),
**characterized in that** :
the negative electrode mixture layer comprises
the negative electrode active material represented by a general formula M₃Me₂X₇ (where M includes at least one of La and Ca; Me includes at least one of Mn, Ni, Fe, and Co; and X includes at least one of Ge, Si, Sn, and Al); and
a binder containing a cyano group, and
a ratio of the binder in the negative electrode mixture layer is 0.5 weight% to 7.0 weight%.

2. The lithium-ion battery according to claim 1, wherein
the binder containing the cyano group is polyacrylonitrile, and
a ratio of polyacrylonitrile is 1.0 weight% to 5.0 weight%.

3. The lithium-ion battery according to claim 2, wherein
the ratio of polyacrylonitrile is 2.0 weight% to 3.0 weight%.

4. The lithium-ion battery according to any one of claims 1 to 3, wherein
the negative electrode active material represented by the general formula M₃Me₂X₇ is La₃Ni₂Sn₇.

## Patentansprüche

1. Lithium-Ionen-Batterie, aufweisend eine positive Elektrode (11) mit einer positiven Elektrodenmischungsschicht, die ein positives Elektrodenaktivmaterial enthält, und eine negative Elektrode (12) mit einer negativen Elektrodenmischungsschicht, die ein negatives Elektrodenaktivmaterial enthält, wobei Laden und Entladen durch Lithium-Ionen verursacht werden, die sich zwischen der positiven Elektrode (11) und der negativen Elektrode (12) bewegen,
**dadurch gekennzeichnet, dass**:
die negative Elektrodenmischungsschicht umfasst
das negative Elektrodenaktivmaterial, das durch eine allgemeine Formel M₃Me₂X₇ beschrieben ist (wobei M mindestens eines ausgewählt aus La und Ca ist; Me mindestens eines von Mn, Ni, Fe und Co enthält; und X mindestens eines von Ge, Si, Sn und Al enthält); und
ein Cyano-Gruppen enthaltendes Bindemittel, und der Gehalt des Bindemittels in der negativen Elektrodenmischungsschicht 0,5 Gew-% bis 7,0 Gew-% beträgt.

2. Lithium-Ionen-Batterie nach Anspruch 1, wobei das Bindemittel, das die Cyano-Gruppe enthält, Polyacrylnitril ist, und der Gehalt von Polyacrylnitril 1,0 Gew-% bis 5,0 Gew-% beträgt.

3. Lithium-Ionen-Batterie nach Anspruch 2, wobei das Verhältnis von Polyacrylnitril 2,0 Gew-% bis 3,0 Gew-% beträgt.

4. Lithium-Ionen-Batterie nach einem der Ansprüche 1-3, wobei das negative Elektrodenaktivmaterial, das durch die allgemeine Formel M₃Me₂X₇ beschrieben ist, La₃Ni₂Sn₇ ist.

## Revendications

1. Batterie lithium-ion comprenant une électrode positive (11) avec une couche de mélange d'électrode positive contenant un matériau actif d'électrode positive, et une électrode négative (12) avec une couche de mélange d'électrode négative contenant un matériau actif d'électrode négative, la charge et la décharge résultant du déplacement d'ions lithium entre l'électrode positive (11) et l'électrode négative (12),
**caractérisée en ce que** :
la couche de mélange d'électrode négative comprend
le matériau actif d'électrode négative représenté par une formule générale M₃Me₂X₇ (où M comprend au moins un élément parmi La et Ca ; Me comprend au moins un élément parmi Mn, Ni, Fe et Co ; et X comprend au moins un élément parmi Ge, Si, Sn et Al) ; et
un liant contenant un groupe cyano, et
une proportion de liant dans la couche de mélange d'électrode négative est de 0,5 % en poids à 7,0 % en poids.

2. Batterie lithium-ion selon la revendication 1, dans laquelle le liant contenant le groupe cyano est le polyacrylonitrile, et une proportion de polyacrylonitrile est de 1,0 % en poids à 5,0 % en poids.

3. Batterie lithium-ion selon la revendication 2, dans laquelle la proportion de polyacrylonitrile est de 2,0 % en poids à 3,0 % en poids.

4. Batterie lithium-ion selon l'une quelconque des revendications 1 à 3, dans laquelle le matériau actif d'électrode négative représenté par la formule générale M₃Me₂X₇ est La₃Ni₂Sn₇.
